# EUROPEAN PATENT APPLICATION

(11) **EP 2 085 206 A1**
(43) Date of publication of application: **05.08.2009**
(21) Application number: 07829996.3
(22) Date of filing: 17.10.2007
(51) Int. Cl.: B29C 45/73, B29C 45/26, B29L 17/00

(54) **DISK-MOLDING MOLD AND MIRROR SURFACE DISK**

(30) Priority: 20.10.2006 JP 2006285691
(71) Applicant: Sumitomo Heavy Industries, LTD., Tokyo 141-6025 (JP); Seikoh Giken CO., LTD., Matsudo-shi, Chiba 270-2214 (JP)
(72) Inventor: SUZUKI, Yasuo, Chiba-shi Chiba 263-0001 (JP); GOTO, Yoshiyuki, Matsudo-shi Chiba 270-2214 (JP); YOKOTA, Shouji, Tokyo 108-0014 (JP)
(74) Representative: Emde, Eric
(86) International application number: PCT/JP2007/070262
(87) International publication number: WO 2008/050652

(57) **Abstract**

An object is to improve the appearance of a disk substrate, and, in particular, improve the characteristics of an optical disk serving as a recording medium. A disk-molding mold includes a first mirror-surface disk disposed on a first mold side, and a second mirror-surface disk disposed on a second mold side. A temperature control flow passage (83, 84) is formed in at least one of the first and second mirror-surface disks such that the temperature control flow passage is inclined in relation to the axial direction of the first and second mirror-surface disks. Since the temperature control flow passage (83, 84) is formed in at least one of the first and second mirror-surface disks such that the temperature control flow passage is inclined in relation to an axial direction of the first and second mirror-surface disks, the area of the temperature control flow passage (83, 84) as measured in a cross section of the corresponding mirror-surface disk taken along a radial direction thereof can be increased, and the total area of the inner circumferential surface of the temperature control flow passage (83, 84) can be increased. As a result, cooling efficiency can be improved.

## Description

### TECHNICAL FIELD

The present invention relates to a disk-molding mold and a mirror-surface disk.

### BACKGROUND ART

Conventionally, in a molding machine, such as an injection molding machine for molding disk substrates each serving as a recording medium, resin heated and melted within a heating cylinder is charged into a cavity in a disk-molding mold, and is then cooled and hardened in the cavity so as to obtain a disk substrate.

For such a molding process, the above-mentioned injection molding machine includes a disk-molding mold consisting of a stationary-side mold assembly and a movable-side mold assembly; an injection apparatus for charging resin into a cavity; and a mold-clamping apparatus for bringing the movable-side mold assembly into contact with the stationary-side mold assembly and separating the movable-side mold assembly from the stationary-side mold assembly.

The mold-clamping apparatus is operated so as to advance and retreat the movable-side mold assembly to thereby close, clamp, and open the disk-molding mold. When the mold disk is clamped, a cavity is formed between a disk plate of the stationary-side mold assembly and a disk plate of the movable-side mold assembly.

The injection apparatus includes a heating cylinder; an injection nozzle attached to a front end of the heating cylinder; and a screw disposed in the heating cylinder so that the screw can rotate and can advance and retreat.

In a metering step, the screw is rotated, whereby resin is melted and accumulated in front of the screw, and the screw is retreated accordingly. During this period, the disk-molding mold is closed and clamped. Subsequently, in an injection step, the screw is advanced, whereby the resin accumulated in front of the screw is injected from the injection nozzle and charged into the cavity. In a cooling step, the resin in the cavity is cooled, and hole punching is performed, whereby a disk substrate is completed. At that time, a fine pattern of a stamper attached one of the disk plates is transferred to the disk substrate. Subsequently, the disk-molding mold is opened, and the disk substrate is removed therefrom.

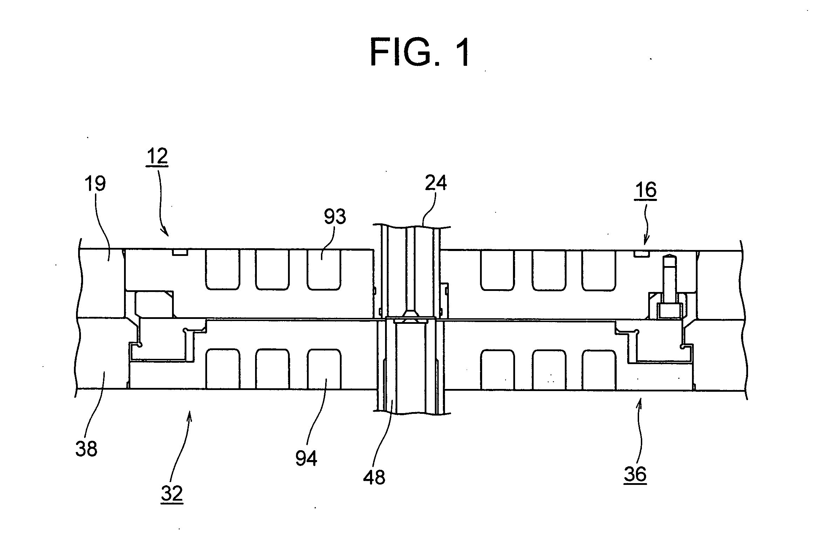

FIG. 1 is a sectional view showing a main portion of a conventional disk-molding mold.

In FIG. 1, reference numeral 12 denotes a stationary-side mold assembly, which includes a disk plate 16 attached to an unillustrated base plate, a peripheral ring 19, a sprue bush 24, etc. An unillustrated stamper is attached to the disk plate 16.

Reference numeral 32 denotes a movable-side mold assembly, which includes an unillustrated base plate, an illustrated intermediate plate attached to the base plate, a disk plate 36 attached to the intermediate plate, a peripheral ring 38, a cut punch 48, etc.

Incidentally, first and second temperature control flow passages 93 and 94 are formed in the disk plates 16 and 36 so as to increase the cooling rate of resin and improve transfer of the fine pattern of the stamper. A temperature control medium such as water, oil, or air is supplied to the first and second temperature control flow passages 93 and 94 so as to cool the disk plates 16 and 36, to thereby cool the resin.

In this case, cooling efficiency is improved by forming the first and second temperature control flow passages 93 and 94 such that their bottom surfaces are located near the front end surfaces of the disk plates 16 and 36; i.e., the cavity surfaces (see, for example, Patent Document 1). Patent Document 1: Japanese Patent Application Laid-Open (*kokai*) No. 2005-212176

### DISCLOSURE OF THE INVENTION

### PROBLEMS TO BE SOLVED BY THE INVENTION

However, in the case of the above-described conventional disk-molding mold, since the bottom surfaces of the first and second temperature control flow passages 93 and 94 are located near the cavity surfaces, the disk plates 16 and 36 cannot be cooled uniformly, and a temperature nonuniformity arises in the disk plates 16 and 36.

As a result, the density of resin charged into the cavity locally changes, whereby a portion of a disk substrate corresponding to the first and second temperature control flow passages 93 and 94 has a thickness different from that of the remaining portion. Thus, a pattern of the flow passage is transferred to the disk substrate as is, and its appearance deteriorates. Further, birefringence changes and the characteristics of the disk substrate deteriorate.

An object of the present invention is to solve the above-mentioned problem in the conventional disk-molding mold and to provide a disk-molding mold which can improve the appearance of a disk substrate and improve the characteristics of an optical disk serving as a recording medium, as well as a mirror-surface disk therefor.

### MEANS FOR SOLVING THE PROBLEMS

To achieve the above object, a disk-molding mold of the present invention comprises a first mirror-surface disk disposed on a first mold side, and a second mirror-surface disk disposed on a second mold side and facing the first mirror-surface disk.

A temperature control flow passage is formed in at least one of the first and second mirror-surface disks such that the temperature control flow passage is inclined in relation to an axial direction of the first and second mirror-surface disks.

### EFFECTS OF THE INVENTION

According to the present invention, a disk-molding mold comprises a first mirror-surface disk disposed on a first mold side, and a second mirror-surface disk disposed on a second mold side and facing the first mirror-surface disk.

A temperature control flow passage is formed in at least one of the first and second mirror-surface disks such that the temperature control flow passage is inclined in relation to an axial direction of the first and second mirror-surface disks.

In this case, since a temperature control flow passage is formed in at least one of the first and second mirror-surface disks such that the temperature control flow passage is inclined in relation to the axial direction of the first and second mirror-surface disks, the area of the temperature control flow passage as measured in a cross section of the corresponding mirror-surface disk taken along a radial direction thereof can be increased, and the total area of the inner circumferential surface of the temperature control flow passage can be increased. As a result, cooling efficiency can be improved.

Further, since cooling regions formed between the bottom surfaces of the temperature control flow passages and the corresponding cavity surfaces overlap one another, generation of a temperature nonuniformity in the first and second mirror-surface disks can be prevented.

As a result, the density of resin charged into a cavity does not change locally, and the thickness of a portion of a disk substrate corresponding to the temperature control flow passage becomes equal to that of the remaining portion. Therefore, it becomes possible to prevent transferring of a pattern of the flow passage to a disk substrate, which would otherwise result in deterioration of the appearance of the disk substrate, and prevent deterioration of the characteristics of the disk substrate, which deterioration would otherwise occur through, for example, change in birefringence.

### BRIEF DESCRIPTION OF THE DRAWINGS

[FIG. 1] Sectional view showing a main portion of a conventional disk-molding mold.
[FIG. 2] Sectional view showing a main portion of a disk-molding mold according to a first embodiment of the present invention.
[FIG. 3] Sectional view of the disk-molding mold according to the first embodiment of the present invention.
[FIG. 4] Sectional view showing a main portion of a disk-molding mold according to a second embodiment of the present invention.

### DESCRIPTION OF REFERENCE NUMERALS

12, 32: mold assembly
16, 36: disk plate
83, 84, 183: temperature control flow passage

### BEST MODE FOR CARRYING OUT THE INVENTION

Embodiments of the present invention will next be described in detail with reference to the drawings. Herein, an injection molding machine, which is an example molding machine, and a disk-molding mold for molding disk substrates will be described.

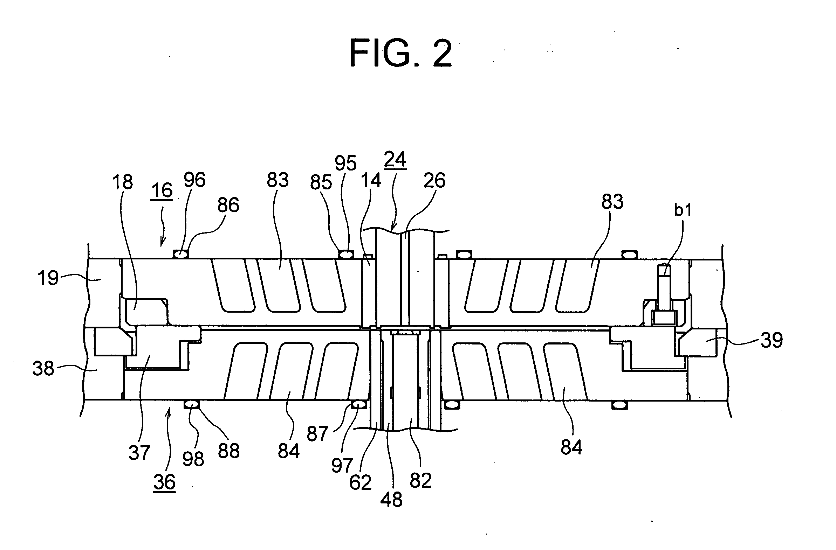

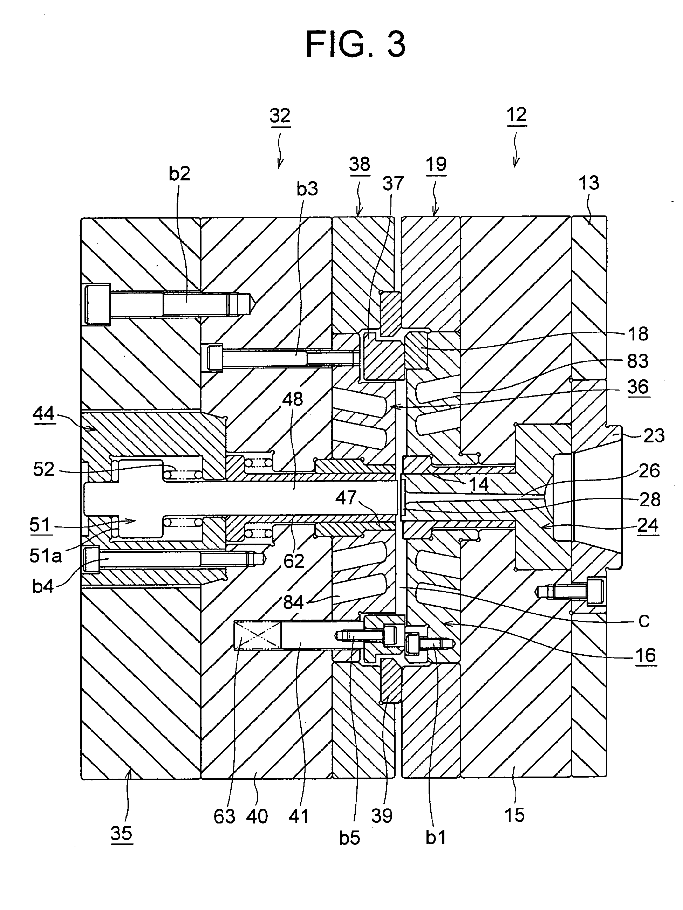

FIG. 2 is a sectional view showing a main portion of a disk-molding mold according to a first embodiment of the present invention. FIG. 3 is a sectional view of the disk-molding mold according to the first embodiment of the present invention.

In these drawings, reference numeral 12 denotes a stationary-side mold assembly attached to an unillustrated stationary platen via an attachment plate 13 by use of unillustrated bolts. The mold assembly 12 includes a base plate (first support plate) 15; a disk plate (first mirror-surface disk) 16 attached to the base plate 15 by use of unillustrated bolts; a locating ring 23 disposed within in the base plate 15 in such a manner as to face the stationary platen and adapted to position the base plate 15 with respect to the stationary platen; and a sprue bush 24 disposed adjacent to the locating ring 23. A die 28 is formed at the front end of the sprue bush 24 so that the die 28 faces a cavity C. A sprue 26 is formed in the sprue bush 24 and communicates with the die 28. Resin (molding material) injected from an injection nozzle of an unillustrated injection apparatus passes through the sprue 26. Notably, the injection apparatus includes a heating cylinder; the injection nozzle attached to the front end of the heating cylinder; and a screw disposed in the heating cylinder so that the screw can rotate and can advance and retreat.

An unillustrated stamper for transferring a fine pattern onto an information surface of a disk substrate is attached to the disk plate 16. A stamper-holding bush 14 for holding an inner circumferential edge of the stamper is disposed radially outside a front half portion of the sprue bush 24. An illustrated cooling-medium flow passage is formed in the sprue bush 24, and a temperature control medium such as water, oil, or air is supplied to the cooling-medium flow passage to thereby cool the sprue bush 24. Notably, an unillustrated air blow bush and the like are also disposed in the mold assembly 12.

An annular butt ring 18 is attached to an outer circumferential edge of the disk plate 16 by use of bolts b1. An annular peripheral ring 19 is disposed radially outside the disk plate 16 and the butt ring 18 and attached to the base plate 15.

Meanwhile, reference numeral 32 denotes a movable-side mold assembly attached to an unillustrated movable platen by use of unillustrated bolts. The mold assembly 32 includes a base plate 35; an intermediate plate (second support plate) 40 attached to the base plate 35 by use of bolts b2; a disk plate (second mirror-surface disk) 36 attached to the intermediate plate 40 by use of bolts b3; a cylinder 44 which is disposed within the base plate 35 in such a manner as to face the movable platen and which is attached to the intermediate plate 40 by use of bolts b4; and a cut punch 48 which is advanced and retreated along the cylinder 44 and whose front end (an end portion on the side toward the mold assembly 12) has a shape corresponding to the die 28.

An annular cavity ring 37 is disposed along an outer circumferential edge of the disk plate 36 and in opposition to the butt ring 18 such that the cavity ring 37 can move in relation to the disk plate 36. An annular peripheral ring 38 is disposed radially outside the disk plate 36 and the cavity ring 37 and in opposition to the peripheral ring 19, and is attached to the intermediate plate 40. The cavity ring 37 is attached to a rod 41 by use of bolts b5 such that it is disposed movably, via the rods 41, in relation to the intermediate plate 40. Reference numeral 39 denotes a cavity ring retainer attached to the peripheral ring 38 by use of unillustrated bolts. The cavity ring retainer 39 is engaged with an outer circumferential edge of the cavity ring 37. The cavity ring 37 projects from the front end surface of the disk plate 36. The inner circumferential surface of the cavity ring 37 forms the outer circumferential edge of a disk substrate.

A flange 51 formed integrally with the cut punch 48 is disposed within the cylinder 44 such that it can be advanced and retreated. A rear end 51a of the flange 51 is received by the cylinder 44. Further, a cut-punch return spring 52 is disposed ahead of the flange 51. The cut-punch return spring 52 urges the flange 51 rearward.

Notably, the mold assemblies 12 and 32 constitute a disk-molding mold; and an unillustrated mold-clamping apparatus is disposed in order to bring the mold assembly 32 into contact with the mold assembly 12 and separate the mold assembly 32 away from the mold assembly 12. The mold assembly 32 is advanced and retreated through drive of a mold-clamping cylinder of the mold-clamping apparatus, whereby the disk-molding mold can be closed, clamped, and opened. When the disk-molding mold is clamped, the above-described cavity C is formed between the disk plates 16 and 36.

Further, when the disk-molding mold is clamped, the flange 51 is advanced through drive of an unillustrated drive cylinder. Thus, the cut punch 48 is caused to advance and enter the die 28. As a result, a hole is formed in the resin within the cavity C. Notably, an ejector bush 62 for ejecting a disk substrate is disposed radially outside a front half portion of the cut punch 48. In addition, an air blow bush 47 for blowing compressed air against the disk substrate to thereby separate the disk substrate from the disk plate 36 is disposed radially outside the ejector bush 62. Moreover, an ejector pin 82 and the like component are disposed in the cut punch 48.

Incidentally, in the case where the thickness of the disk substrate is 0.8 mm or greater, the characteristics of the disk substrate deteriorate if the cooling rate of resin lowers. Therefore, in order to increase the cooling rate of resin and improve transfer of the fine pattern of the stamper, first and second temperature control flow passages 83 and 84 are formed in the disk plates 16 and 36, respectively, and a temperature control medium, such as water, oil, or air, is supplied to the first and second temperature control flow passages 83 and 84, to thereby cool the disk plates 16 and 36, and cool the resin.

The first and second temperature control flow passages 83 and 84 are each formed of a spiral groove. The first temperature control flow passage 83 is opened to a surface of the disk plate 16, which surface is in contact with the base plate 15, and has a bottom surface on the cavity surface side. The second temperature control flow passage 84 is opened to a surface of the disk plate 36, which surface is in contact with the intermediate plate 40, and has a bottom surface on the cavity surface side. Annular grooves 85 and 86 are formed in the base plate 15 such that they are located on the radially inner side and the radially outer side, respectively, of an area facing the first temperature control flow passage 83, and O-rings (seal members) 95 and 96 are fitted into the grooves 85 and 86 so as to seal the first temperature control flow passage 83. Further, annular grooves 87 and 88 are formed in the intermediate plate 40 such that they are located on the radially inner side and the radially outer side, respectively, of an area facing the second temperature control flow passage 84, and O-rings (seal members) 97 and 98 are fitted into the grooves 87 and 88 so as to seal the second temperature control flow passage 84.

In the present embodiment, the above-described spiral groove is formed by a single groove which continues from the inner circumferential side toward the outer circumferential side. However, the spiral groove may be formed by a plurality of grooves. Further, in place of the spiral groove, there may be employed a groove composed of concentric circular groove portions and groove portions which extend in the radial direction and which connect the circular groove portions together.

In the present embodiment, each of the first and second temperature control flow passages 83 and 84 is formed such that the groove thereof has a small pitch in the radial direction of the disk plates 16 and 36 and a small width. Notably, the groove width is set to fall within a range of 2 mm to 10 mm, inclusive, preferably, within a range of 3 mm to 8 mm, inclusive.

Further, the respective grooves of the first and second temperature control flow passages 83 and 84 are inclined in relation to the axial direction of the disk plates 16 and 36 such that their front ends (bottom-surface side end portions) become closer to the center. Therefore, the area of the groove as measured in a cross section of the corresponding disk plate 16 or 36 taken along a radial direction thereof can be increased. In addition, the total area of the inner circumferential surface of the grove; i.e., the cooling area, can be increased. As a result, cooling efficiency can be improved. Notably, the angle of inclination; i.e., an angle by which each of the grooves is inclined, is set to be greater than 0° but not greater than 45°, and is preferably set to fall within a range of 8° to 25°, inclusive.

By virtue of the above-described configuration, the cross sectional areas of the first and second temperature control flow passages 83 and 84 can be increased, and cooling efficiency can be increased. Thus, molding can be performed with a shortened molding cycle. In addition, since cooling regions formed between the bottom surfaces of the grooves and the corresponding cavity surfaces overlap one another, generation of a temperature nonuniformity in the first and second disk plates 16 and 36 can be prevented.

As a result, the density of resin charged into the cavity C does not change locally, and the thickness of a portion of a disk substrate corresponding to the first and second temperature control flow passages 83 and 84 becomes equal to that of the remaining portion. Therefore, it becomes possible to prevent transfer of the pattern of the flow passage to a disk substrate, which would otherwise result in deterioration of the appearance of the disk substrate, and prevent deterioration of the characteristics of the disk substrate, which deterioration would otherwise occur through, for example, change in birefringence. Further, the passage height, which is the distance between the bottom surface of each groove and the corresponding cavity surface, can be reduced. The passage height is generally not less than 2 mm, preferably not less than 3 mm, and is generally not greater than 8 mm, preferably not greater than 6 mm, and more preferably not greater than 4 mm. Notably, in the present embodiment, the passage height increases toward the radially outer side.

Incidentally, when a disk substrate is molded, molten resin is charged into the cavity from a location corresponding to a central portion of the disk substrate. In addition, an outer circumferential edge portion of the cavity is adjacent to an outer non-heated portion. Therefore, an outer circumferential edge portion of the disk substrate is cooled more easily as compared with an inner circumferential edge portion of the disk substrate. Accordingly, the inner circumferential edge portion of the disk substrate is likely to have a temperature higher than that of the outer non-heated portion thereof. In view of this phenomenon, the passage height is increased toward the radially outer side, whereby the temperature distribution within the disk substrate can be improved.

In the present embodiment, since the O-ring 95 is required to be disposed at the radially inner side of the base plate 15, and the O-ring 97 is required to be disposed at the radially inner side of the intermediate plate 40, the respective grooves are inclined such that their front ends are shifted toward the center side. Therefore, regions around the O-rings 95 and 97, which would otherwise be difficult to be cooled, can be cooled sufficiently. Notably, depending on the case, the respective grooves may be inclined such that their front ends are shifted toward the outer circumferential edge side.

The first and second temperature control flow passages 83 and 84 are formed such that the bottom surfaces of the respective grooves deviate from each other in the radial direction of the disk plates 16 and 36 by a half pitch of the groove. Incidentally, a difference in cooling rate of the disk plate 16 (36) and a difference in cooling rate of the disk substrate arise between a portion where the first temperature control flow passage 83 (the second temperature control flow passage 84) is formed and a portion where the first temperature control flow passage 83 (the second temperature control flow passage 84) is not formed. Therefore, if the first and second temperature control flow passages 83 and 84 are formed at the same radial position, a temperature difference is more likely to be produced in the radial direction of the disk substrate. As a result, the thickness, optical characteristics, etc. of the disk substrate become more likely to vary with respect to the radial direction.

In view of this fact, in the present embodiment, the first and second temperature control flow passages 83 and 84 are formed such that the bottom surfaces of the respective grooves deviate from each other in the radial direction of the disk plates 16 and 36 by a half pitch of the groove. Therefore, the disk substrate can be cooled uniformly, and thus, generation of variations in the thickness, optical characteristics, etc. of the disk substrate in the radial direction can be prevented, whereby the characteristics of the disk substrate can be improved further.

Next, a second embodiment of the present invention will be described. Components having the same structures as those of the first embodiment are denoted by the same reference numerals. For the effects that the second embodiment yields through employment of the same structure as the first embodiment, the effects that the first embodiment yields are cited.

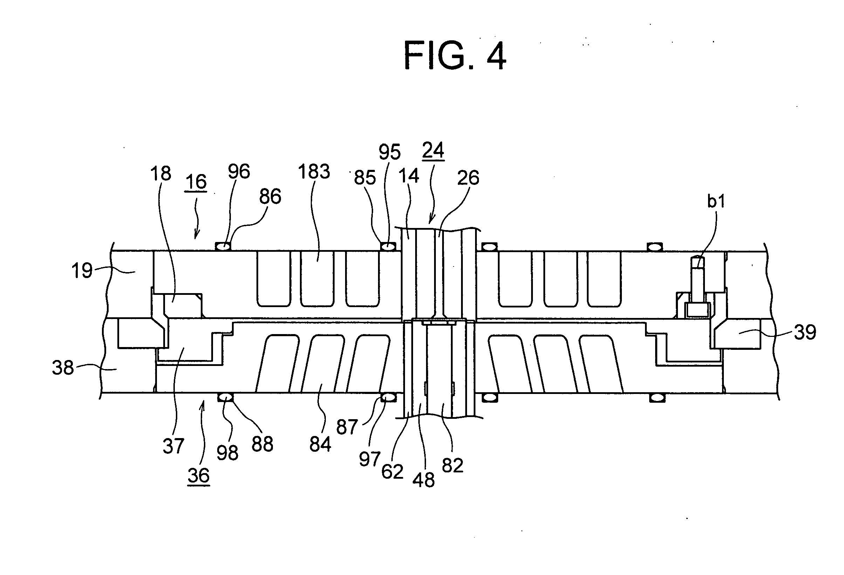

FIG. 4 is a sectional view showing a main portion of a disk-molding mold according to the second embodiment of the present invention.

In this case, the temperature control flow passage of one of the disk plates 16 and 36; in the present embodiment, a first temperature control flow passage 183 of the disk plate 16 is formed such that it becomes parallel to the axial direction of the disk plate 16.

Further, the second temperature control flow passage 84 is inclined in the same manner as in the first embodiment. Accordingly, the area of the groove as measured in a cross section of the corresponding disk plate 36 taken along a radial direction thereof can be increased, and the cooling area of the groove can be increased. As a result, cooling efficiency can be improved.

The present invention is not limited to the above-described embodiments. Numerous modifications and variations of the present invention are possible in light of the spirit of the present invention, and they are not excluded from the scope of the present invention.

## Claims

1. A disk-molding mold comprising:
(a) a first mirror-surface disk disposed on a first mold side; and
(b) a second mirror-surface disk disposed on a second mold side and facing the first mirror-surface disk, wherein
(c) a temperature control flow passage is formed in at least one of the first and second mirror-surface disks such that the temperature control flow passage is inclined in relation to an axial direction of the first and second mirror-surface disks.

2. A disk-molding mold according to claim 1, wherein
(a) the temperature control flow passage is formed in each of the first and second mirror-surface disks; and
(b) the temperature control flow passages of the first and second mirror-surface disks are formed such that their bottom surfaces deviate from each other in a radial direction of the first and second mirror-surface disks.

3. A disk-molding mold according to claim 1 or 2, wherein the temperature control flow passage is formed such that a distance between its bottom surface and a corresponding cavity surface increases toward the outer side with respect to a radial direction of the first and second mirror-surface disks.

4. A mirror-surface disk for a disk-molding mold comprising a first mirror-surface disk disposed on a first mold side and a second mirror-surface disk disposed on a second mold side and facing the first mirror-surface disk, wherein
the mirror-surface disk is used for at least one of the first and second mirror-surface disks and has a temperature control flow passage formed such that the temperature control flow passage is screwed in relation to an axial direction of the first and second mirror-surface disks.
